# EUROPEAN PATENT APPLICATION

(11) **EP 2 128 688 A1**
(43) Date of publication of application: **02.12.2009**
(21) Application number: 09161313.3
(22) Date of filing: 28.05.2009
(51) Int. Cl.: G02F 1/1333, G02F 1/1341, B32B 17/06, C03C 27/12, B32B 37/14, C03C 17/34, E06B 3/67

(54) **Electrically switchable privacy glass pane**

(30) Priority: 12.07.2008 DE 102008032904; 31.05.2008 DE 102008026339
(71) Applicant: Saint-Gobain Glass France S.A., 92400 Courbevoie (FR)
(72) Inventor: Giron, Jean-Christophe, 4700, Eupen (BE); Jousse, Didier, 95150, Taverny (FR); Labrot, Michael, 52072, Aachen (DE); Letocart, Philippe, 4730, Raeren (BE); Mercks, Horst, 52068, Aachen (DE); Andreau-Wiedenmaier, Annabelle, 52074, Aachen (DE); Bouny, Elodie, 60280, Margny-les-Compiègne (FR)
(74) Representative: Lendvai, Tomas

(57) **Abstract**

An electrically switchable privacy glass pane can reversibly alternate its state between a transparent and a nontransparent state by application of an alternating electric field. The privacy glass pane comprises two transparent individual glass panes (1, 11), two electrically conductive layers (3, 9) provided with power supply electrodes and a liquid crystal layer (6) arranged between the electrically conductive layers. The individual glass panes (1, 11) are sealed at the edge by an adhesive sealing compound and connected to one another. A dielectric layer (2, 4; 8, 10) made from SiO₂ is respectively arranged on both sides of the electrically conductive layers (3, 9). The dielectric layers (2, 4; 8, 10) serve the purpose of insulation and act as barriers which prevent the interaction between the glass surfaces and the liquid crystal layer (6).

## Description

The invention relates to an electrically switchable privacy glass pane having a liquid crystal layer alternating reversibly, by application of an alternating electric field, between a transparent and a nontransparent state, two transparent electrically conductive layers provided with power supply electrodes, and two transparent plates, in particular silicate glass panes, which are sealed at the edge by an adhesive sealing compound and connected to one another.

Electrically switchable privacy glass pane can be applied overall both in the construction sector and the automotive sector wherever the view through the glass pane is to be prevented at specific times. Depending on their design, an electric switch can be used to put them from a clearly transparent state into an opaque state, that is to say one which is optically transmissive but nontransparent, into an optically nontransparent state or into a reflecting state, these changes in state being completely reversible.

A privacy glass pane of the type mentioned at the beginning is described, for example, in US 6,963,435 B2. In this known privacy glass pane, the electrically conductive layers are arranged directly on transparent plates and are in direct contact with the liquid crystal layer. In this case, the transparent plates can also consist of silicate glass.

The electrically conductive layers consist mostly of indium tin oxide (ITO) and are not always ideally smooth. In some circumstances, this can have the effect that local elevations of the conducting layers penetrate into the liquid crystal layer and cause an electrical short circuit with the opposite conductive layer. On the other hand, it is not excluded at the interfaces between the glass panes and the conducting layers that, for example, Na ions diffuse from the glass surfaces as far as into the liquid crystal layer and thereby impair their functioning.

It is the object of the invention to further develop a privacy glass pane with the design mentioned at the beginning in order to prevent the risk of impairing the functioning and/or the optical aspect of the glass pane in the course of time.

Furthermore, it is the object of the invention to provide the use of a switchable privacy glass pane.

According to the invention, this object is achieved by virtue of the fact that the electrically conductive layers are respectively embedded between two transparent dielectric layers.

The dielectric layers ensure a certain smoothing of the conducting layers at the interfaces with the liquid crystal layer, and act as electrically insulating layers so as to reduce substantially the risk of the liquid crystal layer being influenced by the electric current. At the glass surfaces, these dielectric layers act as barriers which prevent interaction between the glass surfaces and the liquid crystal layer. They can consist, in particular, of oxides, nitrides or oxynitrides of, for example, silicon or aluminium or their mixtures. Layers made from silicon oxide and silicon nitride, in particular, have proved themselves for this purpose.

Expedient refinements and developments of the invention emerge from the subclaims and from the description below of various exemplary embodiments with the aid of the drawings.

In the drawings,
- Figure 1: shows a first embodiment of the inventive privacy glass pane in a sectional view,
- Figure 2: shows an embodiment comprising two further layers, likewise in a sectional view,
- Figure 3: shows a third embodiment of the privacy glass pane with polarization filters arranged outside on the glass panes,
- Figure 4: shows a further embodiment of the privacy glass pane,
- Figure 5: shows two individual glass panes provided with the various layers, before being assembled, and
- Figure 6: shows an apparatus for pressing the coated individual glass panes, in a sectional view.

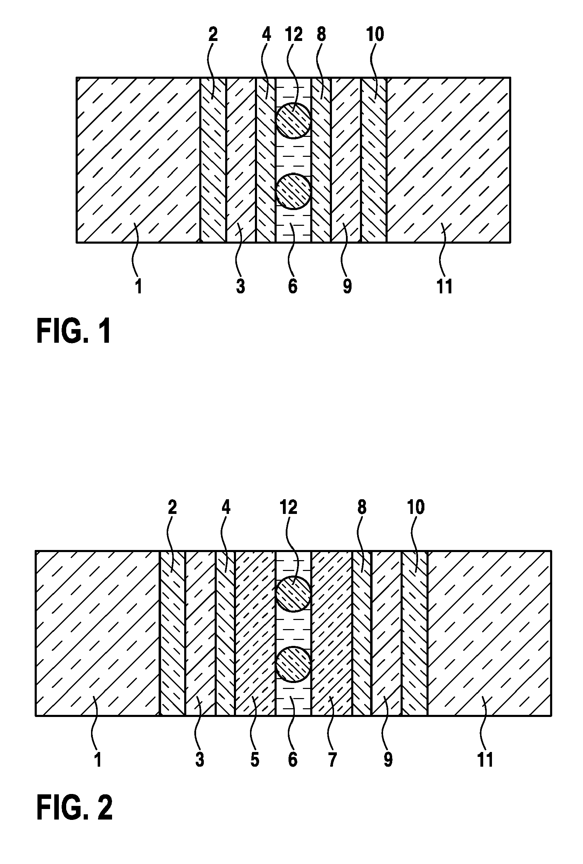

The exemplary embodiment illustrated in Figure 1 shows the design of the inventive privacy glass pane in its simplest embodiment. It comprises the two outer transparent plates 1 and 11 which preferably consist of float glass. The plates 1, 11 can, however, also consist of a suitable transparent polymer, for example of polycarbonate, polyacrylate or polyvinyl chloride. Arranged on the float glass panes 1 and 11 are, firstly, a dielectric layer 2, 10 made from SiO₂ and with a thickness of approximately 3 to 200 nm, preferably 20 to 100 nm, with particular preference approximately 50 nm, thereupon an approximately 20 to 400 nm thick electrically conductive layer 3, 9 made from indium tin oxide (ITO), for example, and thereupon, in turn, an approximately 5 to 40 nm thick dielectric layer 4, 8 made from SiO₂. The ITO layers have an electrical surface resistance between 5 Ω/□ and 300 Ω/□. Instead of the layers made from ITO, it is also possible for other electrically conductive oxide layers, or layers made from elemental silver with a comparable surface resistance to fulfil the same purpose.

The liquid crystal layer 6, which can have a thickness of approximately 10 to 40 µm, lies between the dielectric layers 4 and 8. The liquid crystal layer 6 contains spherical spacers 12 of the same diameter which ensure that the liquid crystal layer 6 has the same thickness over its entire surface. The spacers 12 consist of a transparent hard polymer. By way of example, the product from, Sekisui Chemical Co., Ltd known by the designation "Micropearl SP" has proved itself as spacer.

Known compounds can be used for the liquid crystal layer 6, for example compounds such as are described in document US 5,691,795. The liquid crystal compound from Merck Co., Ltd. which is available under the trade name "Cyanobiphenyl Nematic Liquid Crystal E-31 LV" has also proved to be particularly suitable. In the case of this embodiment, this product is mixed in the ratio 10:2 with a chiral substance, for example 4-cyano-4'-(2-methyl) butylbiphenyl, and this mixture is mixed in the ratio 10:0.3 with a monomer, for example with 4,4'-bisacryloyl biphenyl, and with a UV initiator, for example benzoin methyl ether. The mixture thus prepared is applied to one of the coated glass panes. After curing of the liquid crystal layer by irradiation with UV light, a polymer network has formed in which the liquid crystals are embedded. At the edge, the cavity holding the liquid crystal layer 6 is sealed by an adhesive sealing bead (not illustrated) which simultaneously serves to connect the glass panes 1, 11 provided with the various layers in a firm and permanent fashion.

In the initial state, that is to say without an applied electric voltage, this privacy pane is opaque, that is to say optically transmitting, but nontransparent. As soon as the current is switched on, the liquid crystal layer changes under the action of the alternating electric field into the transparent state, that is to say the one which can be seen through.

Figure 2 illustrates an embodiment in the case of which a 20-200 nm thick layer 5 or 7, respectively, made from a transparent polymer adjoins the dielectric layers 4 and 8. The most varied polymers could certainly be used for these layers, but polyimide has provided to be particularly suitable for this.

The liquid crystal layer 6 which, in turn, has a thickness of approximately 10 to 40 µm and likewise contains spherical spacers 12 of approximately the same diameter, lies between the polyimide layers 5, 7 in this case. It has the same composition as in the case of the exemplary embodiment according to Figure 1. In this embodiment, as well, the liquid crystal layer changes from the opaque into the transparent state reversibly when the electric current is switched on.

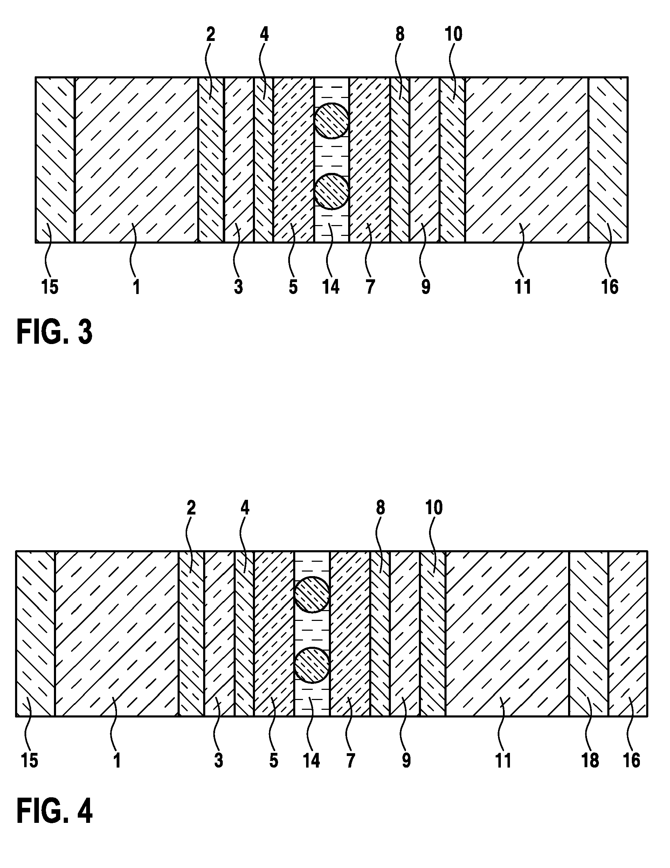

Figure 3 shows an embodiment of the novel privacy glass pane in which the liquid crystal layer 14 does not contain a stabilizing polymer, but consists only of the liquid crystal mass and the spacers. The liquid crystal mass is thus applied as such without a monomer additive with a thickness of 3 to 20 µm to one of the glass panes 1, 11 provided with the above described layers. Compounds for liquid crystal layers of this type are described, for example, in document US 3,963,324. The adhesive sealing compound sealing the individual glass panes 1 and 11 at the edge contain epoxy resin.

The surfaces of the polyimide layers 5 and 7 which adjoin the liquid crystal layer 14 have a linearly structured surface which is produced by a rubbing treatment of the surface with a velvet. The grooved or ridged structure on the surface of one polyimide layer is aligned at a right angle to the linear structure on the surface of the other polyimide layer. The surface structure of the polyimide layers has the effect that the liquid crystals in the neighbouring surface layers of the liquid crystal layer are aligned in the respectively described direction, and this leads to a better contrast between the transparent and the nontransparent state of the glass pane. The polymer layers 5 and 7, which are in contact with the liquid crystal layers 6 and 14 contain polyimide

In this case, an absorbing polarization filter film 15 or 16, respectively, is arranged in each case on the outsides of the coated glass panes 1 and 11. The polarization filters 15 and 16 are arranged in a mutually crossed fashion, the polarization direction respectively corresponding to the alignment of the linear surface structures of the associated polyimide layer. When the current is switched off, the direction of vibration of the polarized light incident through the glass pane 1, for example, is rotated by 90 degrees by the liquid crystal layer 14 such that the light then vibrates in the direction of the polarization filter 16 and therefore exits more or less unattenuated through the polarization filter 16. If, by contrast, the electric voltage is applied such that the liquid crystals become aligned in the direction of the electric field, the action of the liquid crystal layer 14 which rotates the plane of vibration of the polarized light is neutralized and the polarization filter 16 now prevents the passage of the light polarized at right angles thereto, and so it is impossible to see through in this case.

If the absorbing polarization filter films 15 and 16 are not crossed in this embodiment, but are aligned parallel to one another, the mode of operation is opposite. When the current is switched off, the polarized light passing through one of the glass panes 1, 11 is again rotated by 90 degrees by the liquid crystal layer 14 such that the other polarization filter aligned transverse to this plane of vibration now prevents the passage of the light. On the other hand, the light can now pass through the other polarization filter when the current is switched on if the action of the liquid crystal layer which rotates the plane of vibration of the polarized light is neutralized. That is to say, the glass pane becomes transparent in this case when the current is switched on.

The design of the privacy glass pane illustrated in Figure 4 corresponds to the design illustrated in Figure 3, but with the exception that two polarization filters 16, 18 are arranged one on the other on one side of the glass pane. As with the polarization filter 15, the polarization filter 16 arranged on the outside is an absorbing polarization filter, while the polarization filter 18, which is arranged between the glass pane 11 and the polarization filter 16, is a reflecting polarization filter. The two polarization filters 16 and 18 are in direct mutual contact, and are aligned parallel to one another and in a crossed fashion relative to the polarization filter 15.

When the current is switched off, the glass pane is transparent. When the electric current is switched on, it acts as a mirror for the viewer on the side of the polarization filter 15, owing to the reflecting property of the polarization filter 18. The glass pane is nontransparent for the viewer on the side of the polarization filter 16 and constitutes a dark surface.
If, in the case of this embodiment, the two polarization filters 16, 18 aligned parallel to one another are aligned parallel to the absorbing polarization filter 15, the glass pane is nontransparent when the current is switched off and again acts as a mirror for the viewer on the side of the polarization filter 15, while it is transparent when the current is switched on.

It can be expedient to use suitable hard layers to protect the polarization filters 15, 16 arranged on the outsides of the privacy glass pane. Particularly suitable for this are thin silicate glass panes which are connected to the layer packet with the aid of known adhesive techniques.

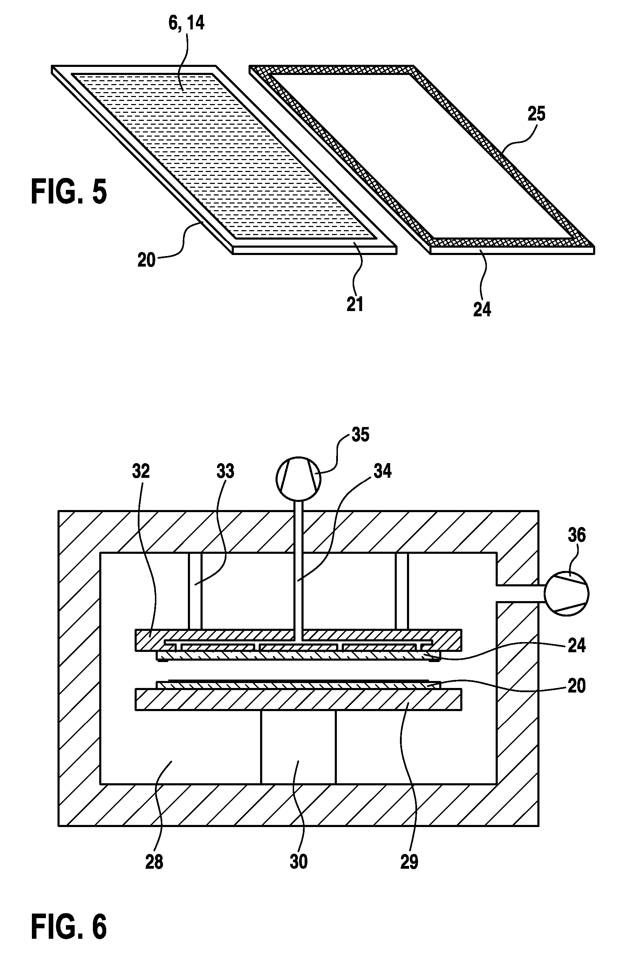

The novel privacy glass pane is produced using a method described in detail with the aid of Figures 5 and 6.

Plates of a suitable transparent substrate of large dimensions, for example float glass panes, are coated in an industrial continuous coating plant using the method of magnetic field supported reactive cathode sputtering in consecutive sputtering chambers in a sequential fashion with an approximately 50 nm thick layer made from SiO₂, an approximately 100 nm thick layer made from ITO and in turn an approximately 50 nm thick layer made from SiO₂. Two individual glass panes of equal size and having the desired dimensions are cut from a large glass pane coated in such a way, and are prepared for further processing.

The two individual glass panes cut to the desired measure are firstly subjected to a washing process. A suitable coating method is next used as appropriate to apply a polyimide solution, for example the product "SE-7992" from Nissan Chemical Industries in a thickness of approximately 50 nm. In the embodiments according to Figures 3 and 4, the cured layer is provided superficially with microscopically fine grooves or ridges running in one direction, this being done by passing a velvet cloth over the surface applying slight pressure.

The liquid crystal layer 6; 14 mixed with the spacers is now applied to one of the two individual glass panes thus treated, specifically the glass pane 20. Here, this can either be the liquid crystal mass provided only with the spacers when the aim is to produce the product described with the aid of Figure 3 or 4, or, in the case of the exemplary embodiments illustrated in Figures 1 and 2, a mixture of liquid crystal mass, spacers and a suitable monomer which is cured to form a polymer in a later curing operation.

Since the two individual glass panes 20 and 24 are later bonded permanently and tightly to one another at the edge, the edge region 21 of the glass pane 20 is not coated on a width of approximately 2 to 10 mm. The coating with the liquid crystal mass is performed with the aid of the so called one-drop fill process. The "one-drop fill process" will be explained as follows. For the application of the process a dripping apparatus will be utilized to allow the deposition of liquid crystal droplets on a glass substrate, wherein the dripping amount can be fine adjusted.

In an embodiment of the process, a screen printing fabric whose mesh width is approximately 20-50 µm and whose thread diameter is approximately 30-50 µm is used to print the liquid crystal layer.

The adhesive layer 25 is likewise applied directly to the glass pane 24 along the edge with the aid of the screen printing method. It can have a width of from 2 to 10 mm, for example. A screen printing textile with a mesh width of 100-200 µm and a thread diameter of 50-120 µm is used to print the adhesive layer. When the two individual glass panes 20, 24 are later pressed, the adhesive layer 25 is compressed to the thickness of the liquid crystal layer. By way of example, the adhesive from Mitsui Chemicals Inc. known by the designation of "Struct Bond XN-21-S" has proved itself as adhesive composition suitable for this purpose.

After the conditioning of the two glass panes 20 and 24, these are assembled with the printed sides and deposited on a table 29 arranged inside an evacuable chamber 28. The evacuable chamber 28 serves the purpose of degassing the liquid crystal layer in order to avoid a later formation of bubbles in the layer. The table 29 can be lowered and raised with the aid of a stand 30 equipped with a lift cylinder and, in cooperation with the plate 32 arranged above the table 29, serves as pressing tool for pressing the two glass panes together. The plate 32 is fastened on the ceiling of the chamber 28 via holders 33.

On its underside, the plate 32 is provided with suction openings which are connected to the vacuum pump 35 via the line 34. The upper individual glass pane 24 is held at a spacing of approximately 0.2-2 mm from the lower glass pane 20 with the aid of the suction plate 32 or a laterally fitted gripper (not illustrated).

The vacuum chamber 28 is provided with controllable heating devices with the aid of which the temperature in the chamber can be set to a desired value between 20 and 120°C. After the positioning of the two individual glass panes, the vacuum chamber 28 is closed, the temperature is brought to the desired value, and the chamber is connected to a vacuum pump 36 with the aid of which an underpressure of approximately 1.10-4 mbar is produced in the chamber. These underpressure and temperature conditions are allowed to act on the liquid crystal layer for a time period of a few minutes.

Subsequently, the table 29 is raised with the aid of the lift cylinder, and the glass pane 20 is pressed against the individual glass pane 24 held by the suction plate 32. As a result, the two glass panes are permanently connected to one another via the adhesive beads, and the interspace between the glass panes which holds the liquid crystal layer is simultaneously sealed. The pressure is allowed to act for a few seconds. The composite pane can be removed from the chamber 28 after ventilation of the latter.

If, as with the embodiments according to Figures 1 and 2, the liquid crystal layer consists of a mixture of liquid crystal and a monomer, the polymerization operation is now performed by irradiation with UV light. To this end, the first step is to apply an alternating voltage to the electrically conductive layers.

The power supply conductors required for making contact between the electrically conductive layers can be mounted on the electrically conductive layers using known methods. For example, it is possible that a strip of conducting silver paste can be applied to the electrically conductive layer before the polyimide layer is applied along an edge of the pane. This application of conducting silver can also be performed with the aid of the screen printing method. Depending on the conducting silver paste used, a drying operation can be added which, as appropriate, can also be performed at an elevated temperature.

However, it is also possible to apply the power supply conductors after the production of the composite. In this case, the electrically conductive layers must be accessible along two end faces of the composite. This can be achieved by leaving the two edge zones free from the polyimide layer and displacing the adhesive layer inward at these sides. The two individual glass panes printed with the aid of the liquid crystal layer and of the adhesive frame are then assembled such that the two noncoated edge strips project by approximately 3 to 10 mm. The power supply conductors can then be applied to the unobstructed edge strips, for example again by applying a conducting silver paste which dries in the air.

As to the exemplary embodiment according to Figure 3, a polarization film 15 is subsequently laminated onto the outer surface of the individual glass pane 1, and a polarization film 16 is subsequently laminated onto the outer surface of the individual glass pane 11. It is to be ensured in this case that the direction of polarization of the polarization filter 15 corresponds to the direction of the linear grooved structure on the polyimide layer 5, and that the direction of polarization of the polarization filter 16 corresponds to the direction of the linear grooved structure on the polyimide layer 7.

In the embodiments according to Figure 4, two polarization filters 16, 18 are laminated onto the glass pane 11, of which the outer polarization filter 16 is an absorbing polarization filter, and the polarization filter 18 is a reflecting polarization filter, both being aligned in the same direction.

It can be expedient in the case of the embodiments according to Figures 3 and 4 to protect the polarization filters 15 and 16 by a nonscratch layer. Two thin float glass panes are then preferably connected to the pane with the aid of suitable adhesive films.

The novel privacy glass pane can be used in the construction sector and automotive sector, in particular in glazings for buildings and glazings for vehicles.

## Claims

1. Electrically switchable privacy glass pane having a liquid crystal layer (6; 14) alternating reversibly, by application of an alternating electric field, between a transparent and a nontransparent state, two transparent electrically conductive layers (3, 9) provided with power supply electrodes, and two transparent plates (1, 11), in particular individual silicate glass panes, which are sealed at the edge by an adhesive sealing compound and connected to one another, **characterized in that** the electrically conductive layers (3, 9) are respectively embedded between two transparent dielectric layers (2, 10; 4, 8).

2. Electrically switchable privacy glass pane according to Claim 1, **characterized in that** the dielectric layers (2, 4, 8, 10) have a thickness of 3 to 200 nm, preferably from 20 to 100 nm, and with particular preference approximately 50 nm.

3. Electrically switchable privacy glass pane according to Claim 1 or 2, **characterized in that** the dielectric layers consist of an oxide, a nitride or an oxynitride of Si or Al, or of a mixture of these compounds.

4. Electrically switchable privacy glass pane according to one of Claims 1 to 3, **characterized in that** a transparent polymer layer (5, 7) in contact with the liquid crystal layer (6; 14) is respectively arranged on both sides thereof.

5. Electrically switchable privacy glass pane according to Claim 4, **characterized in that** the surfaces of the polymer layers (5, 7) have a linearly aligned superficial grooved or ridged structure caused by a rubbing treatment.

6. Electrically switchable privacy glass pane according to Claims 1 to 5, **characterized in that** spaces (12) made from a hard transparent plastic determining the thickness of the liquid crystal layer (6; 14) are arranged therein.

7. Electrically switchable privacy glass pane according to Claims 1 to 6, **characterized in that** a polarization film (15, 16) is respectively arranged on the outsides of the glass panes (1, 11).

8. Electrically switchable privacy glass pane according to Claims 1 to 6, **characterized in that** arranged on the outside of one individual glass pane (1) is an absorbing polarization film (15), and on the outside of the other individual glass pane (11) are two identically aligned polarization films (16, 18), of which the polarization film (18) adjacent to the individual glass pane (11) is a reflecting polarization film, and the outer polarization film (16) is an absorbing one.

9. Electrically switchable privacy glass pane according to Claim 7 or 8, **characterized in that** hard protective layers are arranged on the polarization films (15, 16).

10. Electrically switchable privacy glass pane according to Claim 9, **characterized in that** the protective layers consist of individual silicate glass panes which are adhesively bonded to the polarization filters (15, 16).

11. Method for producing an electrically switchable privacy glass pane according to one of Claims 1 to 10, **characterized in that** a 5 - 40 µm thick liquid crystal layer (6; 14) is applied, while leaving free the edge region (21) required for sealing, to a transparent plate, in particular an individual glass pane (20), provided with a dielectric layer, an electrically conductive layer and a further dielectric layer, an adhesive sealing compound (25) is applied on the edge region, likewise with the aid of the screen printing method, to a second transparent plate, in particular individual glass pane (24), provided with the same layer structure, the treated individual glass panes (20, 24) are subjected in a heatable chamber (28) which can be put under a partial vacuum to a degassing treatment, and the two individual glass panes are subsequently pressed together in the vacuum chamber, wherein the liquid crystal layer (6, 14) is applied with the aid of the screen printing method or applied by deposition of liquid crystal droplets with the aid of the one-drop fill process.

12. Method according to Claim 11, **characterized in that** before the application of the liquid crystal drops (6; 14) or the adhesive sealing compound (25), the plates or individual glass panes (20, 24) provided with a first dielectric layer, an electrically conductive layer and a second dielectric layer are first provided with a 20 - 200 nm thick layer of a transparent polymer such as polyimide, for example.

13. Method according to Claim 12, **characterized in that** after curing the polyimide layers are provided with a superficially linearly aligned grooved or ridged structure.

14. Method according to Claim 11, **characterized in that** the plates or individual glass panes prepared for coating with the polyimide layer and/or for the liquid crystal mass or with the adhesive sealing compound are sections of a large transparent plate or a large float glass pane which have sequentially been provided with a dielectric layer (2; 10) made from SiO₂, an electrically conductive layer (3; 9) made from indium tin oxide, and a further dielectric layer (4; 8) made from SiO₂, preferably using the method of magnetic field supported reactive cathode sputtering.

15. Use of the electrically switchable privacy glass pane according to one of the claims 1 to 10 as glazing in vehicles and buildings.
